# EUROPEAN PATENT SPECIFICATION

(11) **EP 2 172 830 B1**
(45) Date of publication and mention of the grant of the patent: **06.11.2013**
(21) Application number: 09169454.7
(22) Date of filing: 04.09.2009
(51) Int. Cl.: G06F 1/16

(54) **Flange structure for a portable terminal**
Flanschstruktur für ein tragbares Endgerät
Structure de bride pour terminal portable

(30) Priority: 25.09.2008 KR 20080094161
(43) Date of publication of application: 07.04.2010
(73) Proprietor: Samsung Electronics Co., Ltd., Suwon-si, Gyeonggi-do, 443-742 (KR)
(72) Inventor: Park, Joong-Wan, 442-742, Gyeonggi-do (KR); Park, Seong-Ha, 442-742, Gyeonggi-do (KR); Park, Sung-soo, 442-742, Gyeonggi-do (KR); Kim, Sung-Won, 442-742, Gyeonggi-do (KR)
(74) Representative: Grünecker, Kinkeldey, Stockmair & Schwanhäusser

(56) References cited:
- EP-A- 1 717 781
- DE-U1- 20 016 023
- US-A1- 2005 285 991
- US-A1- 2006 098 134
- US-A1- 2007 103 853
- US-A1- 2007 115 268
- US-A1- 2008 012 834
- US-A1- 2008 130 212

## Description

### BACKGROUND TO THE INVENTION

### 1. Field of the Invention

The present invention relates generally to an image display means, and more particularly to a flange structure for a portable terminal including an image display means.

### 2. Background to the Invention

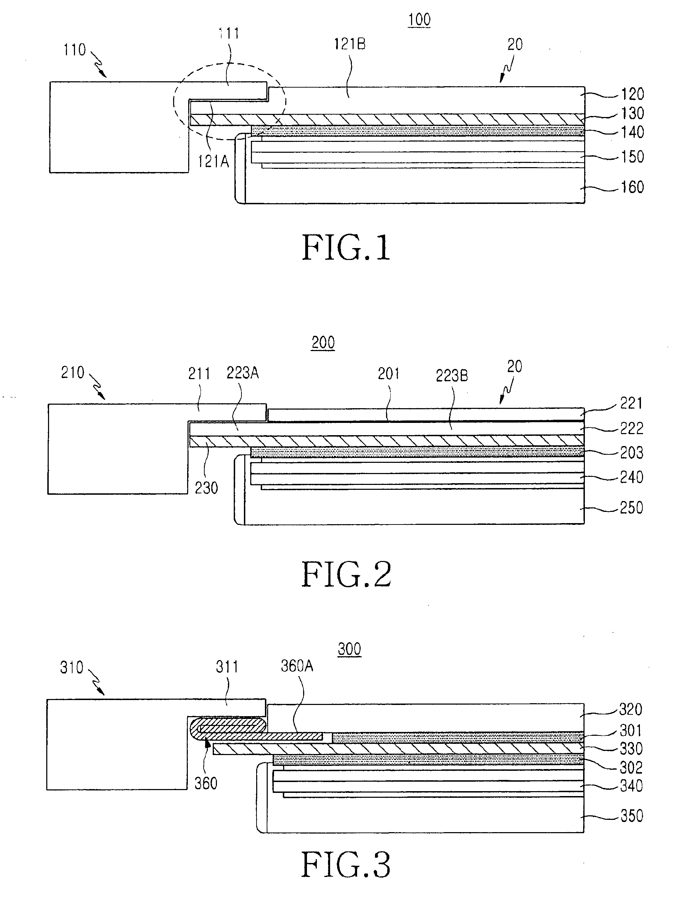

FIG. 1 illustrates a part assembled with an image display in a conventional portable terminal. The portable terminal 100 shown in FIG. 1 includes a case 110 having a flange 111 which protrudes to fix an image display 20. The image display 20 is mounted in the case 110 while being assembled with one end of the flange 111.

The image display 20 includes a liquid crystal panel 150, a backlight unit 160 placed under the liquid crystal panel 150, a touch screen panel 130, a window 120 attached on the touch screen panel 130, and an adhesive 140 for attaching the liquid crystal panel 150 to the touch screen panel 130.

One part of the window 120 that is in contact with the flange 111 is shaped in the manner of a stair. The window 120 includes a first part 121A being placed under the flange 111 and having a thicker width than that of a second part 121B which is not placed directly under the flange 111. That is, the second part 121B of the window 120 has a thinner width than that of the first part 121A and is assembled with the flange 111 of the case 110.

However, according to the above-mentioned structure, a stress is concentrated due to the width difference between the first part 121 A and the second part 121B of the window 120, which may cause an easy breakage of the part in which the flange having the concentrated stress is assembled with the window 120.

### SUMMARY OF THE INVENTION

Accordingly, the present invention has been made to solve the above-stated problems occurring in the prior art, and an object of the present invention is to minimize the stress concentrated on and likelihood of breakage of a part of the portable terminal in which the case is connected with the window.

In accordance with the present invention, there is provided a portable terminal as set out in claims 1 and 8.

### BRIEF DESCRIPTION OF THE DRAWINGS

The above and other aspects, features and advantages of the present invention will be more apparent from the following detailed description taken in conjunction with the accompanying drawings, in which:
FIG. 1 illustrates a portable terminal according to the prior art;
FIG. 2 illustrates a portable terminal according to a first embodiment of the present invention; and
FIG. 3 illustrates a portable terminal according to a second embodiment of the present invention.

### DESCRIPTION OF EMBODIMENTS OF THE INVENTION

Hereinafter, the preferred embodiments of the present invention will be described with reference to the accompanying drawings. In the following description, detailed explanation of known related functions and constitutions may be omitted for the sake of clarity and conciseness.

FIG. 2 illustrates a portable terminal according to a first embodiment of the present invention. Referring to FIG. 2, a portable terminal 200 includes a case 210 having an opening 20 towards a user and a flange 211 protruding towards the opening 20, a lower window 222 having a partial surface that is attached to a lower surface of the flange 211, an upper window 221 attached on the lower window 222 to be exposed through the opening 20, and a liquid crystal panel 240 placed under the lower window 222.

According to the first embodiment, the lower window 222 is laminated with the upper window 221 having a size smaller than that of the lower window 222 so as to minimize the stress concentrated on the part in which the flange 211 1 is in contact with the lower window 222. That is, the lower window 222 is used as a stress distribution means for connecting the flange 211 and the upper window 221 with each other in such a manner that the stress concentrated on the part is minimized. The lower window 222 includes a first part 223A being placed under the flange 211 and a second part 123B which is not placed directly under the flange 211.

The upper window 221 can be made of glass and the lower window 222 can be made of glass or plastic material. The upper window 221 and lower window 222 can be attached each other by using an adhesive member 201 such as a laminating film, Optical Clear Adhesive (OCA), or ultraviolet rays resin.

A touch screen panel 230 is inserted between the lower window 222 and the liquid crystal panel 240, and the touch screen panel 230 and the liquid crystal panel 240 are attached by an adhesive 203 or other suitable attaching means well-known in the art. A backlight unit 250 can be placed under the liquid crystal panel 240.

FIG. 3 illustrates a portable terminal according to a second embodiment of the present invention. Referring to FIG. 3, the portable terminal includes a case 310 having an opening towards a user operating the terminal and a flange 311 protruding towards the opening, a window 320 inserted in the opening in which its side surface corresponds to or faces a side surface of the flange, a touch screen panel 330 placed under the window 320, an adhesive 301 for attaching the touch screen panel 330 to the window 320, a bracket 360 placed directly under the flange 311 and having an extending part 360A inserted between the touch screen panel 330 and the window 320, a liquid crystal panel 340 placed under the touch screen 330, and a backlight unit 350 placed under the liquid crystal panel 340.

The touch screen panel 330 is attached to the liquid crystal panel 340 by an adhesive 302 or other suitable attachment means well-known in the art. The bracket 360 is made of metal materials, such as Steel Use Stainless (SUS), Aluminum, Magnesium, and the extending part 360A extends so that it can be inserted between the touch screen panel 330 and the window 320.

According to the second embodiment, the window 320 and the case 310 are connected to each other using the bracket 360 so as to minimize the stress concentrated on the window 320. That is, the bracket 360 is used as a stress distribution means for connecting the flange 311 and the window 320 with each other in such a manner that the stress concentrated on the window 320 is minimized.

The conventional portable terminal has a structure vulnerable to exterior physical impact, such as being dropped, due to the flange structure being connected between the case and the image display. The window of the image display is made of plastic and the window is applied to portable terminals of various structures. The window of the image display according to the present invention does not have a discontinuous structure, and as such, the concentration of the stress to the flange of the case is minimized. Therefore, the window of the present invention is made of various materials, such as glass, and is advantageously applied to the portable terminal of various structures.

While the present invention has been shown and described with reference to certain exemplary embodiments and drawings thereof, it will be understood by those skilled in the art that various changes in form and details may be made therein without departing from the scope of the invention as defined by the appended claims.

## Claims

1. A portable terminal (200), comprising:
a case (210);
a first window panel (222);
a second window panel (221); and
a liquid crystal panel (240);
the case having a protruding flange (211) with a surface facing the inside of the case (210);
the first window panel (222) having a first surface and a second surface;
the first surface of the first window panel (222) having a partial surface (223A) being attached to the surface of the flange (211) facing the inside of the case (210);
the second surface of the first window panel (222) facing the liquid crystal panel (240); and
the second window panel (221) being attached to the first surface of the first window panel (222).

2. The portable terminal (200) as claimed in claim 1, further comprising a backlight unit (250);
the liquid crystal panel (240) having a first side facing the first window panel (222) and a second side;
the backlight unit (250) having a side facing the second side of the liquid crystal panel (240).

3. The portable terminal (100) as claimed in claim 2, further comprising:
a touch screen panel (230) placed between the liquid crystal panel (240) and the first window panel (222); and
an adhesive member (203) for attaching the touch screen panel (230) to the liquid crystal panel (240) and for attaching the touch screen panel (240) to the first window panel (222).

4. The portable terminal (200) as claimed in any one of claims 1 to 3, wherein the second window panel (221) is made of a material different from or identical to a material of the first window panel (222).

5. The portable terminal (200) as claimed in any one of claims 1 to 3, wherein the second window panel (221) and the first window panel (222) are made of glass.

6. The portable terminal (200) as claimed in any one of claims 1 to 3, wherein the second window panel (221) is made of glass or plastic.

7. The portable terminal (200) as claimed in any one of claims 1 to 3, wherein the first window panel (222) is made of glass or plastic.

8. A portable terminal (300), comprising:
a case (310);
a window panel (320);
a touch screen panel (330);
an adhesive member (301); and
a bracket (360);
the case having a protruding flange (311) with a surface facing the inside of the case (310), and a side surface;
the touch screen panel (330) having a first surface and a second surface;
the first surface of the touch screen panel (330) facing the surface of the flange facing the inside of the case (310);
the window panel (320) being attached to the first surface of the touch screen panel (330) by the adhesive member (301);
the window panel (320) having a side surface facing the side surface of the flange (311);
the bracket (360) being placed on the side of the flange (311) facing the inside of the case (310); and
the bracket having an extending part (360A) inserted between the touch screen panel (330) and the window panel (320).

9. The portable terminal (300) as claimed in claim 8, further comprising a liquid crystal panel (340),
the liquid crystal panel (340) being attached to the second surface of the touch screen panel (330); and
the liquid crystal panel (340) having a first side and a second side;
the first side of the liquid crystal panel (340) facing the touch screen panel.

10. The portable terminal (300) as claimed in claim 9, further comprising a backlight unit (350) having a side facing the second side of the liquid crystal panel (340).

## Patentansprüche

1. Tragbares Endgerät (200), umfassend:
ein Gehäuse (210);
ein erstes Fensterelement (222);
ein zweites Fensterelement (221); und
ein Flüssigkristallpanel (240);
wobei das Gehäuse einen hervorstehenden Flansch (211) mit einer Oberfläche umfasst, die dem Inneren des Gehäuses (210) zugewandt ist;
wobei das erste Fensterelement (222) eine erste Oberfläche und eine zweite Oberfläche umfasst;
wobei die erste Oberfläche des ersten Fensterelements (222) eine Teilfläche (223A) umfasst, die an der Oberfläche des Flanschs (211) befestigt ist, die dem Inneren des Gehäuses (210) zugewandt ist;
wobei die zweite Oberfläche des ersten Fensterelements (222) dem Flüssigkristallpanel (240) zugewandt ist; und
wobei das zweite Fensterelement (221) an der ersten Oberfläche des ersten Fensterelements (222) befestigt ist.

2. Tragbares Endgerät (200) nach Anspruch 1, des Weiteren umfassend eine Hintergrundbeleuchtungseinheit (250);
wobei das Flüssigkristallpanel (240) eine erste Seite, die dem ersten Fensterelement (222) zugewandt ist, und eine zweite Seite umfasst;
wobei die Hintergrundbeleuchtungseinheit (250) eine Seite umfasst, die der zweiten Seite des Flüssigkristallpanels (240) zugewandt ist.

3. Tragbares Endgerät (100) nach Anspruch 2, des Weiteren umfassend ein Berührungsbildschirmpanel (230), das zwischen dem Flüssigkristallpanel (240) und dem ersten Fensterelement (222) angeordnet ist; und
ein Klebeelement (203) zum Befestigen des Berührungsbildschirmpanels (230) an dem Flüssigkristallpanel (240) und zum Befestigen des Berührungsbildschirmpanels (240) an dem ersten Fensterelement (222).

4. Tragbares Endgerät (200) nach einem der Ansprüche 1 bis 3, wobei das zweite Fensterelement (221) aus einem anderen Material als oder aus einem gleichen Material wie das erste Fensterelement (222) gemacht ist.

5. Tragbares Endgerät (200) nach einem der Ansprüche 1 bis 3, wobei das zweite Fensterelement (221) und das erste Fensterelement (222) aus Glas gemacht sind.

6. Tragbares Endgerät (200) nach einem der Ansprüche 1 bis 3, wobei das zweite Fensterelement (221) aus Glas oder Plastik gemacht ist.

7. Tragbares Endgerät (200) nach einem der Ansprüche 1 bis 3, wobei das erste Fensterelement (222) aus Glas oder Plastik gemacht ist.

8. Tragbares Endgerät (300), umfassend:
ein Gehäuse (310);
ein Fensterelement (320);
ein Berührungsbildschirmpanel (330);
ein Klebeelement (301); und
eine Klammer (360);
wobei das Gehäuse einen hervorstehenden Flansch (311) mit einer Oberfläche umfasst, die dem Inneren des Gehäuses (310) zugewandt ist;
wobei das Berührungsbildschirmpanel (330) eine erste Oberfläche und eine zweite Oberfläche umfasst;
wobei die erste Oberfläche des Berührungsbildschirmpanels (330) der Oberfläche des Flanschs zugewandt ist, die dem Inneren des Gehäuses (310) zugewandt ist;
wobei das Fensterelement (320) an der ersten Oberfläche des Berührungsbildschirmpanels (330) mittels des Klebeelements (301) befestigt ist;
wobei das Fensterelement (320) eine Seitenfläche umfasst, die der Seitenfläche des Flanschs (311) zugewandt ist;
wobei die Klammer (360) an der Seite des Flanschs (311) angeordnet ist, die dem Inneren des Gehäuses (310) zugewandt ist; und
wobei die Klammer (360) einen verlängerten Teil (360A) umfasst, der zwischen dem Berührungsbildschirmpanel (330) und dem Fensterelement (320) eingefügt ist.

9. Tragbares Endgerät nach Anspruch 8, des Weiteren umfassend ein Flüssigkristallpanel (340),
wobei das Flüssigkristallpanel (340) an der zweiten Oberfläche des Berührungsbildschirmpanels (330) befestigt ist; und
wobei das Flüssigkristallpanel (340) eine erste Seite und eine zweite Seite umfasst;
wobei die erste Seite des Flüssigkristallpanels (340) dem Berührungsbildschirmpanel (330) zugewandt ist.

10. Tragbares Endgerät (300) nach Anspruch 9, des Weiteren umfassend ein Hintergrundbeleuchtungselement (350), das eine Seite umfasst, die der zweiten Seite des Flüssigkristallpanels (340) zugewandt ist.

## Revendications

1. Terminal portable (200) comprenant :
un boîtier (210) ;
un premier panneau de fenêtre (222) ;
un second panneau de fenêtre (221) ; et
un panneau à cristaux liquides (240) ;
le boîtier comportant une bride en saillie (211) avec une surface tournée vers l'intérieur du boîtier (210) ;
le premier panneau de fenêtre (222) ayant une première surface et une seconde surface ;
la première surface du premier panneau de fenêtre (222) comportant une surface partielle (223A) fixée à la surface de la bride (211) tournée vers l'intérieur du boîtier (210) ;
la seconde surface du premier panneau de fenêtre (222) étant tournée vers le panneau à cristaux liquides (240) ; et
le second panneau de fenêtre (221) étant fixé à la première surface du premier panneau de fenêtre (222).

2. Terminal portable (200) selon la revendication 1, comprenant en outre une unité de rétroéclairage (250) ;
le panneau à cristaux liquides (240) ayant une première face tournée vers le premier panneau de fenêtre (222) et une seconde face ;
l'unité de rétroéclairage (250) ayant une face tournée vers la seconde face du panneau à cristaux liquides (240).

3. Terminal portable (100) selon la revendication 2, comprenant en outre :
un panneau d'écran tactile (230) disposé entre le panneau à cristaux liquides (240) et le premier panneau de fenêtre (222) ; et
un élément adhésif (203) pour fixer le panneau d'écran tactile (230) au panneau à cristaux liquides (240) et pour fixer le panneau d'écran tactile (240) au premier panneau de fenêtre (222).

4. Terminal portable (200) selon l'une quelconque des revendications 1 à 3, dans lequel le second panneau de fenêtre (221) est fabriqué dans un matériau différent du matériau du premier panneau de fenêtre (222) ou identique à celui-ci.

5. Terminal portable (200) selon l'une quelconque des revendications 1 à 3, dans lequel le second panneau de fenêtre (221) et le premier panneau de fenêtre (222) sont fabriqués en verre.

6. Terminal portable (200) selon l'une quelconque des revendications 1 à 3, dans lequel le second panneau de fenêtre (221) est fabriqué en verre ou en plastique.

7. Terminal portable (200) selon l'une quelconque des revendications 1 à 3, dans lequel le premier panneau de fenêtre (222) est fabriqué en verre ou en plastique.

8. Terminal portable (300) comprenant :
un boîtier (310) ;
un panneau de fenêtre (320) ;
un panneau d'écran tactile (330) ;
un élément adhésif (301) ; et
une console (360) ;
le boîtier comportant une bride en saillie (311) avec une surface tournée vers l'intérieur du boîtier (310) et une surface latérale ;
le panneau d'écran tactile (330) ayant une première surface et une seconde surface ;
la première surface du panneau d'écran tactile (330) étant tournée vers la surface de la bride tournée vers l'intérieur du boîtier (310) ;
le panneau de fenêtre (320) étant fixé à la première surface du panneau d'écran tactile (330) par l'élément adhésif (301) ;
le panneau de fenêtre (320) ayant une surface latérale tournée vers la surface latérale de la bride (311) ;
la console (360) étant disposée sur la face de la bride (311) tournée vers l'intérieur du boîtier (310) ; et
la console comportant une partie d'extension (360A) insérée entre le panneau d'écran tactile (330) et le panneau de fenêtre (320).

9. Terminal portable (300) selon la revendication 8, comprenant en outre un panneau à cristaux liquides (340),
le panneau à cristaux liquides (340) étant fixé à la seconde surface du panneau d'écran tactile (330) ; et
le panneau à cristaux liquides (340) ayant une première face et une seconde face ;
la première face du panneau à cristaux liquides (340) étant tournée vers le panneau d'écran tactile.

10. Terminal portable (300) selon la revendication 9, comprenant en outre une unité de rétroéclairage (350) ayant une face tournée vers la seconde face du panneau à cristaux liquides (340).
